# EUROPÄISCHE PATENTSCHRIFT

(11) **EP 1 281 577 B1**
(45) Veröffentlichungstag und Bekanntmachung des Hinweises auf die Patenterteilung: **26.01.2005**
(21) Anmeldenummer: 02017198.9
(22) Anmeldetag: 31.07.2002
(51) Int. Cl.: B60R 11/00, F16B 37/04, F16B 21/06, F16B 5/10

(54) **Vorrichtung zur Befestigung eines ersten Teils an einem zweiten Teil**
Device for attaching one part to another
Dispositif de fixation

(30) Priorität: 01.08.2001 DE 10137286
(43) Veröffentlichungstag der Anmeldung: 05.02.2003
(73) Patentinhaber: Goodrich Hella Aerospace Lighting Systems GmbH, 59557 Lippstadt (DE)
(72) Erfinder: Hessling, André, 59555 Lippstadt (DE); Wisch, Bodo, 28309 Bremen (DE)
(74) Vertreter: Hilleringmann, Jochen, Dipl.-Ing.

(56) Entgegenhaltungen:
- GB-A- 2 082 243
- US-A- 4 385 851
- US-A- 5 593 265

## Beschreibung

Die Erfindung betrifft eine Vorrichtung zur Befestigung eines ersten Teils an einem zweiten Teil und insbesondere zur Befestigung eines Verkleidungselements in dem Innenraum eines Fahrzeuges, bei dem es sich vorzugsweise um ein Flugzeug handelt.

Aus DE-A-199 00 267, DE-A-197 30 269, EP-A-1 215 082 und WO-A-00/40436 ist eine Vorrichtung zur Befestigung eines ersten Teils an einem (feststehenden) zweiten Teil eines Luftfahrzeuges bekannt, bei dem das erste Teil über ein Befestigungselement lösbar mit dem zweiten Teil verbindbar ist. Das erste Teil kann beispielsweise als Verkleidungselement mit oder ohne Funktionseinheiten wie beispielsweise Sauerstoffversorgungseinheit, Leseleuchten, Luftdüsen oder Betätigungselemente zum Ein- und Ausschalten von Funktionselementen ausgebildet sein, wobei ein derartiges Verkleidungselement an einem C-förmigen Profil (zweites Teil) befestigbar ist. Das Befestigungselement weist einen Grundkörper mit einer Durchgangsbohrung auf, in der ein mit einem Verriegelungselement gekoppeltes Betätigungselement drehbar gelagert ist. Bei dem Betätigungselement handelt es sich beispielsweise um eine Schraube, die mittels eines Schraubendrehers verdreht werden kann. Das parallelogrammförmige Gestalt aufweisende Verriegelungselement ist auf der dem zweiten Teil zugewandten Seite des Grundkörpers angeordnet. Eine Verriegelung wird durch Verdrehung des Verriegelungselements herbeigeführt. Hierzu wird das Betätigungselement entgegengesetzt zur Vorspannkraft einer Feder axial in Richtung des zweiten Teils, also in Richtung des C-förmigen Profils gedrückt, was zu einer Anhebung des Verriegelungselements gegenüber der an dem zweiten Teil anliegenden Anlagefläche des Grundkörpers führt. Damit wird das Verriegelungselement außer Eingriff mit Anschlagvorsprüngen auf der Anlagefläche des Grundkörpers gebracht. Nun kann durch Verdrehung des Betätigungselements eine zirka 90°-Verdrehung des Verriegelungselements bewirkt werden, so dass dieses in eine Vorverriegelungsposition gebracht wird. Das Verriegelungselement ist in dieser Vorverriegelungsposition gegen eine weitere Mitnahme bei Drehung des Betätigungselements gesichert, und zwar am zweiten Teil. Das Betätigungselement und das Verriegelungselement stehen in Gewindeeingriff miteinander, so dass eine weitere Verdrehung des Betätigungselements dann, wenn das Verriegelungselement seine Vorverriegelungsposition einnimmt, zu einer axialen Relativbewegung von Betätigungselement und Verriegelungselement führt. Auf diese Weise wird das Verriegelungselement in Richtung auf die Anlagefläche des Grundkörpers zu bewegt, wodurch es zu einem Klemmsitz zwischen dem Verriegelungselement, dem Grundkörper und dem zweiten Teil kommt.

Dadurch, dass der Grundkörper des Befestigungselements bei der Montage den Blick auf das Verriegelungselement versperrt, kann der Monteur die Verdrehstellung des Verriegelungselements von außen nicht einsehen. Auch anhand der Drehstellung des Betätigungselements, das, wie oben dargelegt, mittels eines Schraubendrehers oder dergleichen Werkzeug von der der Anlagefläche abgewandten Unterseite des Grundkörpers zugänglich und sichtbar ist, nach Art eines Schraubenkopfes ausgebildet ist, ist auch dessen Drehstellung kein Indiz dafür, welche Verdrehposition das Verriegelungselement gerade einnimmt. Insbesondere ist also für den Monteur nicht erkennbar, ob das Verriegelungselement gegenwärtig seine Vorverriegelungs- bzw. seine Endverriegelungsposition einnimmt. Darüber hinaus muss der Monteur bei den bekannten Befestigungselementen stets mittels eines Werkzeuges dafür sorgen, dass das Verriegelungselement seine Vorverriegelungsposition einnimmt, in der das Befestigungselement wenn auch nicht kraftschlüssig, so aber doch gegen ein Ablösen gesichert an dem zweiten Teil gehalten ist.

Aus GB-A-2 082 243 ist eine Vorrichtung zur Befestigung eines ersten Teils an einem zweiten Teil beschrieben, die mindestens ein Befestigungselement aufweist, das mit dem ersten Teil verbindbar und lösbar an dem zweiten Teil anbringbar ist. Das mindestens eine Befestigungselement ist mit einem Verriegelungselement und einem Betätigungselement versehen. Das Verriegelungselement ist an dem Befestigungselement zwischen einer Entriegelungsposition, in der das Befestigungselement an den zweiten Teil ansetzbar und von diesem abnehmbar ist, und einer Vorverriegelungsposition, in der das Befestigungselement an dem zweiten Teil gehalten ist, bewegbar gelagert. Das Betätigungselement dient der Bewegung des Verriegelungselements zwischen der Entriegelungsposition und der Vorverriegelungsposition und weist ein erstes Vorspannelement zum Vorspannen des Verriegelungselements in dessen Vorverriegelungsposition und ein Auslöseelement auf, das seinerseits mindestens einen Rückhaltevorsprung für das Verriegelungselement aufweist

Eine Aufgabe der vorliegenden Erfindung ist es daher, eine Vorrichtung zum Befestigen eines ersten Teils an einem (feststehenden) zweiten Teil eines Fahrzeuges derart weiterzubilden, dass die Montage des Befestigungselements an dem zweiten Teil vereinfacht wird.

Zur Lösung dieser Aufgabe wird mit der Erfindung eine Vorrichtung zur Befestigung eines ersten Teils an einem zweiten Teil, insbesondere zur Befestigung eines Verkleidungselements in dem Innenraum eines Fahrzeuges, vorzugsweise eines Luftfahrzeuges, vorgeschlagen, die versehen ist mit den Merkmalen des Anspruchs 1; die Merkmale einzelner Ausgestaltungen der Erfindung sind in den Unteransprüchen angegeben.

Die erfindungsgemäße Befestigungsvorrichtung weist mindestens ein Befestigungselement auf, das mit dem ersten Teil verbindbar, insbesondere schwenkbar verbindbar und an dem zweiten Teil lösbar anbringbar ist. An dem Befestigungselement befindet sich ein Verriegelungselement, das zwischen einer Entriegelungsposition und einer Vorverriegelungsposition drehbar gelagert ist. In der Entriegelungsposition lässt sich das Befestigungselement an dem zweiten Teil anbringen bzw. von diesem ablösen, während es in der Vorverriegelungsposition des Verriegelungselements an dem zweiten Teil gegen unbeabsichtigtes Ablösen gesichert ist.

Die Verdrehung des Verriegelungselements zwischen dessen Entriegelungsposition und Vorverriegelungsposition erfolgt mit Hilfe eines Betätigungselements, das drehbar am Befestigungselement gelagert ist. Mit Hilfe dieses Betätigungselements lässt sich das Verriegelungselement vorzugsweise nicht nur zwischen den beiden zuvor genannten Positionen bewegen, sondern darüber hinaus auch in eine Endverriegelungsposition bringen, in der das Befestigungselement kraftschlüssig (form- und/oder reibflüssig) am zweiten Teil festgelegt ist. Hierbei ist es zweckmäßig, wenn das Betätigungselement als Schraube ausgebildet ist, die an ihrem dem Schraubenkopf abgewandten Ende ihres Gewindeschafts einen Anschlag aufweist, der einen Klemmsitz für das Verriegelungselement bildet, wenn dieses an dem Anschlag anliegt. Die Klemmverbindung von Verriegelungselement und Anschlag bewirkt, dass das Verriegelungselement durch Verdrehung des Betätigungselements von diesem mitgenommen wird. Wird das Verriegelungselement aus der Entriegelungsposition in die Vorverriegelungsposition bewegt, so bewirkt eine weitere Verdrehung des Betätigungselements (Schraube) ein Lösen des Klemmsitzes und ein Festziehen des Verriegelungselements gegen Bereiche des zweiten Teils.

Erfindungsgemäß ist nun vorgesehen, dass das Verriegelungselement in seine Vorverriegelungsposition vorgespannt ist. Wenn also das Verriegelungselement bei Einnahme seiner Entriegelungsposition freigegeben wird, bewegt es sich automatisch in die Vorverriegelungsposition. Die Vorspannfeder kann dabei entweder direkt an dem Verriegelungselement angreifen oder aber indirekt mit diesem gekoppelt sein, indem sie an dem Betätigungselement angreift. Vorzugsweise ist die Vorspannfeder als Torsionsfeder (beispielsweise Schenkeloder Schraubenfeder) ausgebildet, die von dem Betätigungselement durchdrungen ist.

Die Auslösung der Drehbewegung des Verriegelungselements aus der Entriegelungsposition in die Vorverriegelungsposition erfolgt mittels eines Auslöseelements, das beim Anbringen des Befestigungselements an dem zweiten Teil an diesem anliegt. Aufgrund der Anlage wird nun beim Andrücken des Befestigungselements gegen das zweite Teil das Auslöseelement aus einer Rückhalteposition in eine Freigabeposition überführt. In der Rückhalteposition sperrt das Auslöseelement mittels mindestens eines Rückhaltevorsprungs die Bewegung des Verriegelungselements, während das Auslöseelement in seiner Freigabeposition das Verriegelungselement freigibt, in der mindestens eine Rückhaltevorsprung also bis außerhalb der Bewegungsbahn des Verriegelungselements bewegt ist.

Der Vorzug der erfindungsgemäßen Befestigungsvorrichtung ist darin zu sehen, dass das Verriegelungselement zu dem Zeitpunkt, zu dem es in das zweite Teil eingeführt ist und das Befestigungselement mit Druck gegen das zweite Teil anliegt, sich in der Entriegelungsposition befindet, um dann automatisch in die Vorverriegelungsposition zu verschwenken. Das Verriegelungselement hat in der Entriegelungsposition keinen Kontakt zum zweiten Teil, wenn das Befestigungselement in dieses eingeführt bzw. an diesem anliegt. Aus Sicherheitsgründen sind die Oberflächen des Verriegelungselements und des zweiten Teils, die sich im Anbringungszustand berühren, beschichtet, und zwar zum Schutz vor beispielsweise Korrosion. Der Vorteil der erfindungsgemäßen Befestigungsvorrichtung ist nun darin zu sehen, dass diese Schutzbeschichtung nicht durch eine Kontaktierung von Verriegelungselement und zweitem Teil beim Ansetzen der Befestigungsvorrichtung beschädigt wird.

Das Verriegelungselement und das zweite Teil bestehen im Regelfall aus Metall. Durch die Vorspannung des Verriegelungselements in seine Vorverriegelungsposition kommt es nach dem Einführen des Verriegelungselements in das zweite Teil zu einer automatischen Kontaktierung, die optisch wahrnehmbar ist. Damit wird dem Monteur eine akustische Rückmeldung dafür gegeben, dass das Verriegelungselement seine Vorverriegelungsposition eingenommen hat.

In vorteilhafter Weiterbildung der Erfindung ist das Auslöseelement von mindestens einem Vorspannelement in seine Rückhalteposition vorgespannt. Damit nimmt das Auslöseelement diese Rückhalteposition sicher ein, was die Gefahr verringert, dass das Verriegelungselement beim Hantieren mit dem Befestigungselement unbeabsichtigt in die Vorverriegelungsposition übergeht, bevor das Befestigungselement am zweiten Teil anliegt.

Das zuvor genannte Vorspannelement für das Auslöseelement ist zweckmäßigerweise als Schraubendruckfeder ausgebildet. Sämtliche anderen Federmechanismen bzw. Vorspanneinrichtungen sind aber auch möglich. Dies gilt im Übrigen auch für das Vorspannelement, welches das Verriegelungselement in dessen Vorverriegelungsposition vorspannt. Die Bewegung des Verriegelungselements aus der Entriegelungsposition in die Vorverriegelungsposition braucht übrigens nicht notwendigerweise eine Drehbewegung zu sein. Andere Bewegungen, beispielsweise Lateralbewegungen sind ebenfalls möglich.

Es ist zweckmäßig, neben der automatischen Bewegung des Verriegelungselements in die Vorverriegelungsposition auch zusätzlich noch eine optische Anzeige darüber vorzusehen, dass das Verriegelungselement seine Vorverriegelungsposition eingenommen hat. Dies wird zweckmäßigerweise dadurch realisiert, dass das Verriegelungselement oder das Auslöseelement oder das Betätigungselement mit einem Anzeigeelement, vorzugsweise in Form eines Anzeigestiftes, gekoppelt ist. Dieses Anzeigeelement nimmt unterschiedliche Positionen ein, und zwar in Abhängigkeit von der Einnahme der Position des Verriegelungselements. So wäre es beispielsweise denkbar, dass das Anzeigeelement von dem Befestigungselement absteht, wenn das Verriegetungsetement sich in seiner Vorverriegelungsposition befindet. Dies hat den Vorteil, dass man das Anzeigeelement ertasten kann, ein direkter Blickkontakt zum Anzeigeelement also nicht erforderlich ist, um sich darüber zu vergewissern, dass das Verriegelungselement seine Vorverriegelungsposition eingenommen hat.

Das Anzeigeelement ist mit einem derjenigen Elemente des Befestigungselements verbunden, die sich beim Bewegen des Verriegelungselements aus der Entriegelungsposition in die Vorverriegelungsposition mitbewegt. Bei diesen Elementen handelt es sich insbesondere um das Verriegelungselement; alternativ kann es aber auch so sein, dass das Anzeigeelement mit dem Betätigungselement für das Verriegelungselement gekoppelt ist. Dies setzt voraus, dass, was an sich der Fall ist, das Betätigungselement sich mit dem Verriegelungselement mitbewegt, wenn das Verriegelungselement aus der Entriegelungsposition in die Vorverriegelungsposition überführt wird.

Alternativ ist es auch möglich, das Anzeigeelement mit dem Auslöseelement zu koppeln. Denn wenn das Auslöseelement seine Freigabeposition einnimmt, bewegt sich das Verriegelungselement automatisch in die Vorverriegelungsposition.

Wie bereits oben dargelegt, kann es sich bei dem Anzeigeelement um ein Element handeln, das in seinem einen Zustand vom Befestigungselement absteht und in seinem anderen Zustand gegenüber dem Befestigungselement zurückspringt bzw. mit dessen Außenseite fluchtet. Es ist aber auch möglich, dass das Anzeigeelement in der einen Position bei Betrachtung des Befestigungselements sichtbar ist und in der anderen nicht. Auch könnten die Bereiche, die vom Anzeigeelement jeweils sichtbar sind, unterschiedlich gefärbt sein. Schließlich ist es auch möglich, dem Anzeigeelement eine andere Einfärbung zu verleihen als dem Befestigungselement.

Durch das Vorsehen des Anzeigeelements ist somit eine weitere optische bzw. taktile Anzeigemöglichkeit für den Umstand gegeben, dass sich das Verriegelungselement in seiner Vorverriegelungsposition befindet. Diese Anzeigemöglichkeiten bestehen dann zusätzlich zu der bereits oben angesprochenen akustischen Rückmeldung, dass das Verriegelungselement seine Vorverriegelungsposition eingenommen hat.

Die vorstehend beschriebene Ausbildung des erfindungsgemäßen Befestigungselements mit dem Merkmal, dass die Einnahme der Vorverriegelungsposition bzw. Endverriegelungsposition des Verriegelungselements angezeigt wird, lässt sich unabhängig davon realisieren, dass das Verriegelungselement vorgespannt ist. Soweit sind beide Varianten selbstständig schutzbegründend.

Die Erfindung wird nachfolgend anhand eines Ausführungsbeispiels unter Bezugnahme auf die Zeichnung näher erläutert. Im Einzelnen zeigen:
- Fig. 1: einen Teilquerschnitt durch eine Flugzeugkabine,
- Fig. 2: eine vergrößerte Darstellung des Bereichs II der Figur 1, wobei in dieser Darstellung sich das Verriegelungselement in seiner Vor- bzw. Entverriegelungsposition befindet,
- Fig. 3: eine Draufsicht auf das Befestigungselement mit sich in seiner Entriegelungsposition befindenden Verriegelungselement,
- Fig. 4: eine Darstellung ähnlich der gemäß Figur 2, jedoch in demjenigen Zustand, in dem das Verriegelungselement bereits in das C-förmige zweite Teil eingeführt ist, jedoch noch seine Entriegelungsposition einnimmt,
- Fig. 5: eine Draufsicht auf das Befestigungselement mit sich in der Vorverriegelungsposition befindenden Verriegelungselement,
- Fig. 6: die Situation, in der das Befestigungselement gegen das C-förmige zweite Teil angedrückt ist und sich das Verriegelungselement als Folge davon in seiner Vorverriegelungsposition verdreht hat, und
- Fig. 7: einen Schnitt entlang der Linie VII-VII der Figur 6.

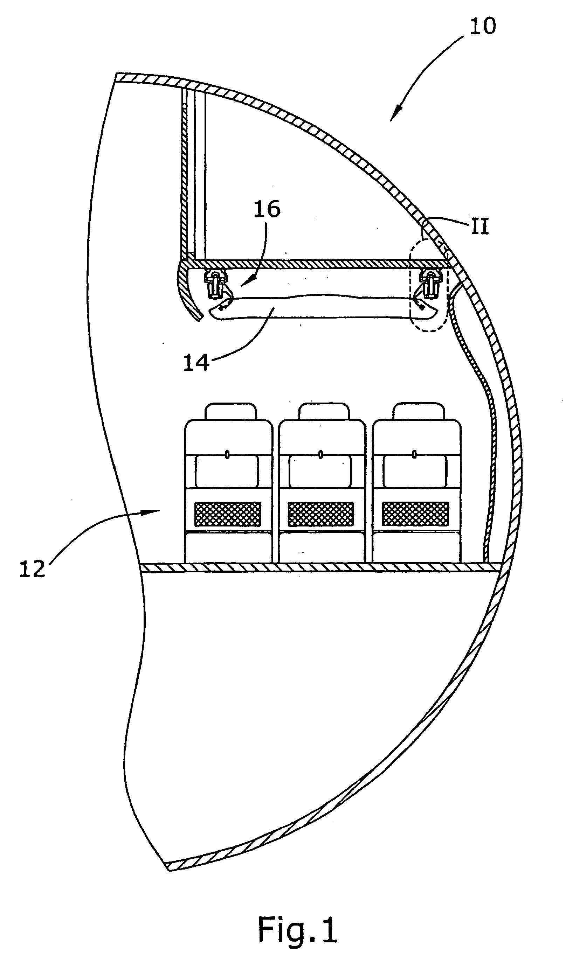

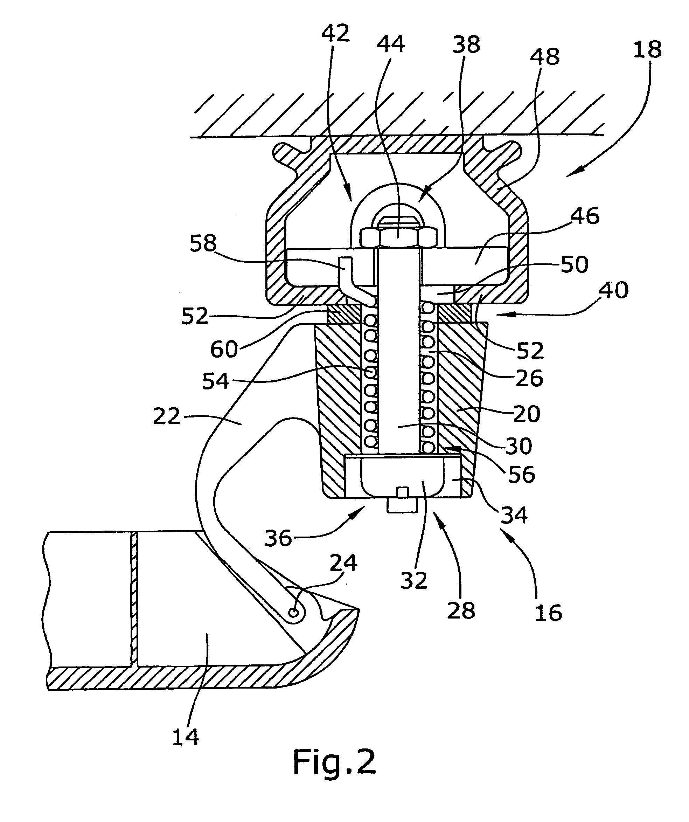

In Fig. 1 ist im Querschnitt ein Teil einer Flugzeugkabine 10 gezeigt, bei der zur Befestigung von oberhalb der Flugzeugsitze 12 befindlichen Verkleidungselementen 14 eine erfindungsgemäße Befestigungsvorrichtung mit mehreren Befestigungselementen 16 eingesetzt wird. Der Aufbau eines Befestigungselements und sein Zusammenspiel mit einem Verkleidungselement 14 einerseits und einer Haltestruktur 18 des Flugzeuges andererseits wird nachfolgend anhand der Fign. 2 bis 7 erläutert.

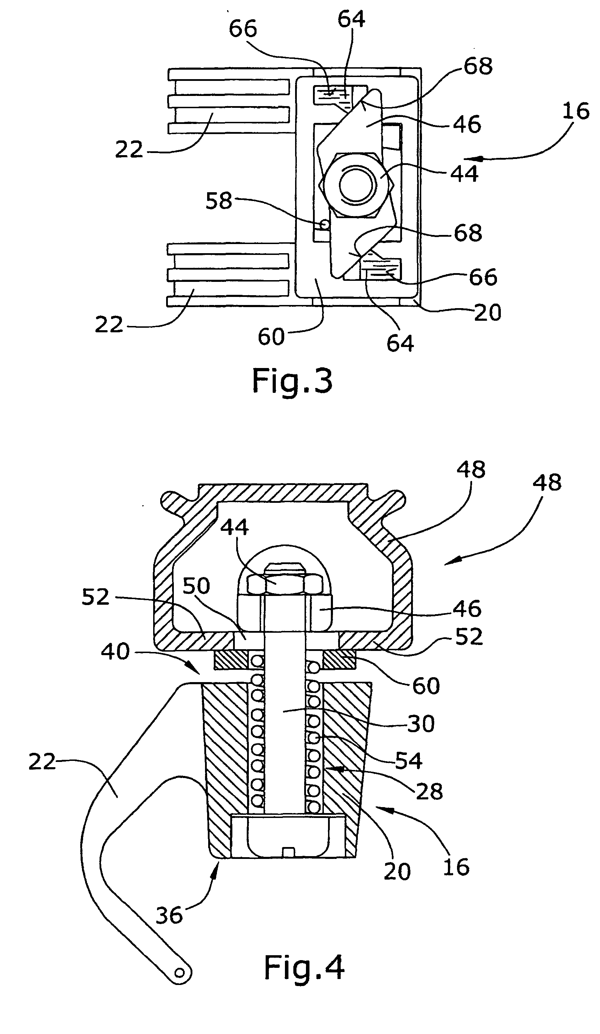

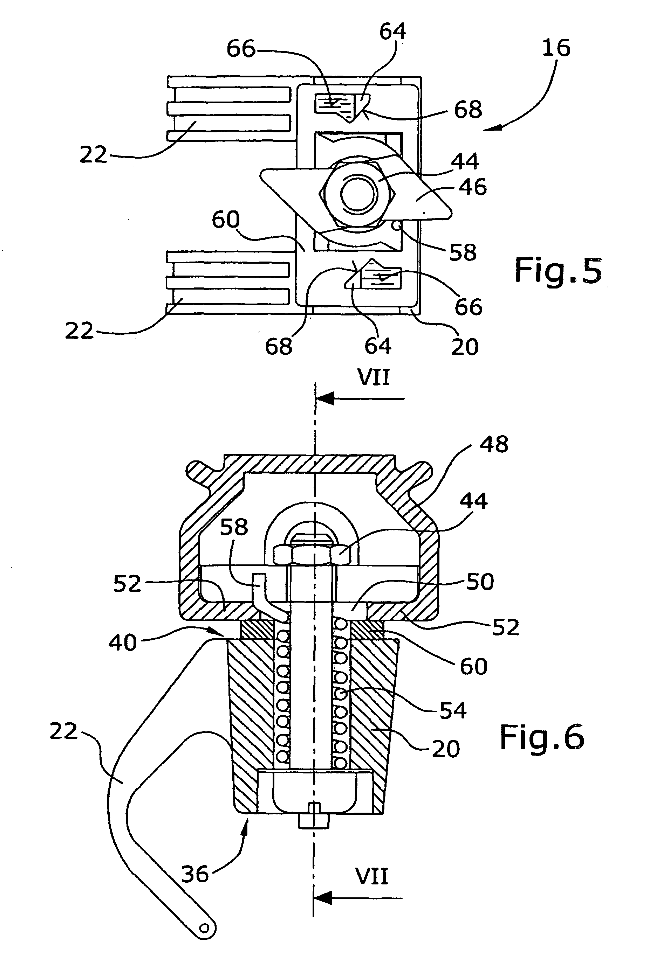

Das Befestigungselement 16 weist einen Grundkörper 20 auf, der über zwei Bügel 22 (siehe Fign. 3 und 5) schwenkbar um einen Achsstift 24 gelagert ist, welcher an dem Verkleidungselement 14 befestigt ist. Durch den Grundkörper 20 des Befestigungselements 16 hindurch erstreckt sich eine Durchgangsbohrung 26, in der sich ein Betätigungselement 28 in Form einer Schraube 30 befindet. Während der Schraubenkopf 32 in einer Aussparung 34 am unteren Ende 36 des Grundkörpers 20 angeordnet ist, steht das gegenüberliegende Ende 38 der Schraube 30 über das obere Ende 40 des Grundkörpers 20 über. An diesem Ende 38 der Schraube 30 befindet sich ein Anschlag 42 in Form einer Schraubenmutter 44, die kraftschlüssig mit der Schraube 30 verbunden ist. Die Schraubenmutter 44 lässt sich also relativ zur Schraube 30 nicht bewegen (drehfeste Verbindung).

In Gewindeeingriff mit dem Gewinde der Schraube 30 steht ein Verriegelungselement 46, das, wie beispielsweise in den Fign. 3 und 5 zu erkennen ist, parallelogrammförmig ist.

Das Verriegelungselement 46 kann zwei verschiedene Drehstellungen einnehmen, die in den Fign. 3 und 5 gezeigt sind. Gemäß Fig. 3 nimmt das Verriegelungselement 46 seine Entriegelungsposition ein, in der es, in der Draufsicht betrachtet, nicht über den Grundkörper 20 des Befestigungselements 16 übersteht. In seiner im wesentlichen um 90° gedrehten Stellung gemäß Fig. 5 nimmt das Verriegelungselement 46 seine Vorverriegelungsposition ein, die es im vollständig verriegelten Zustand beibehält.

Während die Fign. 3 und 5 die Situationen darstellen, in denen das Befestigungselement 16 frei von der Haltestruktur 18 des Flugzeuges ist, zeigen die Fign. 2, 4 und 6 die Situationen im eingebauten Zustand. Im eingebauten Zustand ist das Verriegelungselement 46 in ein C-förmiges Profil 48 eingetaucht, das eine Einführöffnung 50 aufweist. Die Einführöffnung 50 ist dabei etwas breiter als die schmalere Dimension des riegel- bzw. stegförmigen Verriegelungselements 46. Das bedeutet, dass wenn sich das Verriegelungselement 46 in seiner Verriegelungsposition gemäß Fig. 3 befindet, das Befestigungselement 16 derart mit dem C-förmigen Profil 48 zusammenführen lässt, dass das Verriegelungselement 46 durch die Öffnung 50 hindurch in das C-förmige Profil 48 einführbar ist (siehe Fig. 4). Im vormontierten bzw. endgültig montierten Zustand (siehe Fign. 6 und 2) nimmt das Verriegelungselement 46 seine Vor- bzw. Endverriegelungsposition ein, in der das Verriegelungselement 46 von innen an den die Öffnung 50 begrenzenden Schenkelenden 52 des C-förmigen Profils 48 anliegt. Durch Festziehen der Schraube 30 werden dann das Verriegelungselement 46 und der Grundkörper 20 gegeneinander bewegt, um zwischen sich die Schenkelenden 52 klemmend zu halten (Reib-Kraftschluss).

Die Besonderheit des hier beschriebenen Befestigungselements 16 besteht darin, dass das Verriegelungselement 46 beim Ansetzen des Grundkörpers 20 an das C-förmige Profil 48 aus seiner bis dahin eingenommenen Entriegelungsposition (siehe Fign. 3 und 4) in die Vorverriegelungsposition (siehe Fign. 5 und 6) übergeht. Dies wird dadurch erreicht, dass das Verriegelungselement 46 in seine Vorverriegelungsposition vorgespannt ist. Zu diesem Zweck weist das Befestigungselement 16 eine Torsionsfeder 54 in Form einer Schraubenfeder auf, deren eines Ende 56 am Grundkörper 20 festgelegt ist und deren anderes Ende 58 an dem Verriegelungselement 46 anliegt. Die Torsion bzw. Verdrehung der Torsionsfeder 54 zur Erzeugung der Vorspannung ist nun so gewählt, dass das Federende 58 das Verriegelungselement 46 ausgehend von der Situation gemäß Fig. 3 gegen den Uhrzeigersinn bewegt, bis das Verriegelungselement 46 seine Vorverriegelungsposition gemäß Fig. 5 einnimmt. Auch in dieser Vorverriegelungsposition kann das Verriegelungselement 46 immer noch einer Kraft durch die Feder 54 bzw. das Federende 58 ausgesetzt sein. In der Vorverriegelungsposition (und ebenfalls in der Endverriegelungsposition) liegt das Verriegelungselement 46 zusätzlich auch von innen an dem C-förmigen Profil 48 an (siehe Fign. 2 und 6).

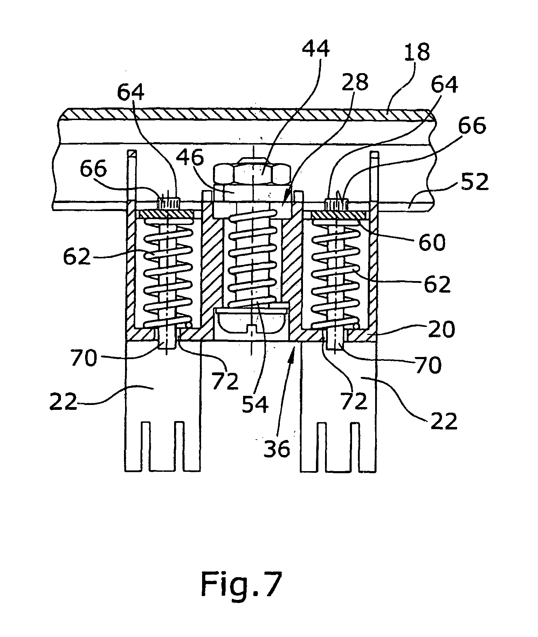

Damit das Verriegelungselement 46 bei Einnahme seiner Entriegelungsposition gemäß Fig. 3 nicht automatisch in die Vorverriegelungsposition gemäß Fig. 5 verschwenkt, weist das Befestigungselement 16 ein Auslöseelement 60 auf, das zwischen einer Rückhalteposition und einer Freigabeposition bewegbar ist. Das Auslöseelement 60 ist in diesem Ausführungsbeispiel nach Art einer Platte ausgebildet, die an der oberen Seite 40 des Befestigungselements zwischen dessen Grundkörper 20 und dem Verriegelungselement 46 angeordnet ist. In seiner Rückhalteposition ist das Auslöseelement 60 gegen die dem Grundkörper 20 zugewandte Unterseite des Verriegelungselements 46 vorgespannt. Zu diesem Zweck ist das Auslöseelement 60 über zwei Druckfedern 62, die sich im Grundkörper 20 abstützen, gegen das Verriegelungselement 46 vorgespannt (siehe Fig. 7).

Auf der dem Verriegelungselement 46 zugewandten Oberseite des Auslöseelements 60 befinden sich zwei gegenüberliegende Rückhaltevorsprünge 64, die schrägverlaufende Auflaufflächen 66 sowie steile Rückhalteflächen 68 aufweisen. In der Darstellung gemäß Fig. 3 liegt das Verriegelungselement 46 mit zwei seiner Begrenzungsflächen an den Rückhalteflächen 68 der beiden Rückhaltevorsprünge 64 an.

Wird nun das Befestigungselement 16 ausgehend von der Situation gemäß Fig. 4, in der das Auslöseelement 60 an den Endschenkeln 52 des C-förmigen Profils 48 anliegt, weiter in Richtung auf das C-förmige Profil 48 bewegt, so bewegt sich das Verriegelungselement 46 von dem Auslöseelement 60 weg, bis das Verriegelungselement 46 über die Haltevorsprünge 64 übersteht. In diesem Augenblick ist das Verriegelungselement 46 freigegeben und kann in seine Vorverriegelungsposition verschwenken. Das Auslöseelement 60 befindet sich dann in seiner Freigabeposition (siehe Fign. 6 und 7).

Die Einnahme der Vorverriegelungsposition des Verriegelungselements geht einher mit einem akustischen Signal (Klick-Laut), da das Verriegelungselement 46 von innen gegen das C-förmige Profil 48 in Anlage gelangt. Es erfolgt also eine akustische Rückmeldung, dass das Verriegelungselement 46 seine Vorverriegelungsposition eingenommen hat.

Zusätzlich ist bei dem hier in Rede stehenden Befestigungselement 16 aber auch noch eine optische Anzeige für die Einnahme der Vorverriegelungsposition durch das Verriegelungselement 46 gegeben. Fig. 7 zeigt, dass von dem Auslöseelement 60 zur Unterseite 36 des Grundkörpers 20 zwei stiftförmige Anzeigeelemente 70 abstehen, die die beiden Schraubendruckfedern 62 durchdringen. Die Enden der Anzeigeelemente 70 stehen, wenn das Auslöseelement 60 seine Freigabeposition eingenommen hat, über die Unterseite 36 des Grundkörpers 20 über und ragen durch dort angeordnete Öffnungen 72 hindurch. Demgegenüber sind die Enden der Anzeigeelemente 70 dann, wenn das Auslöseelement 60 sich in seiner Rückhalteposition befindet, in den Grundkörper 20 zurückgezogen bzw. fluchten mit der Unterseite 36 des Grundkörpers 20.

## Patentansprüche

1. Vorrichtung zur Befestigung eines ersten Teils (14) an einem zweiten Teil (18), insbesondere zur Befestigung eines Verkleidungselements in dem Innenraum eines Fahrzeuges, vorzugsweise eines Luftfahrzeuges, mit
- mindestens einem Befestigungselement (16), das mit dem ersten Teil (14) verbindbar und lösbar an dem zweiten Teil (18) anbringbar ist,
- wobei das mindestens eine Befestigungselement (16) versehen ist mit
- einem Verriegelungselement (46), das zwischen einer Entriegelungsposition, in der das Befestigungselement (16) an den zweiten Teil (18) ansetzbar und von diesem abnehmbar ist, und einer Vorverriegelungsposition, in der das Befestigungselement (16) an dem zweiten Teil (18) beweglich gehalten ist, an dem Befestigungselement (16) bewegbar gelagert ist, und
- wobei das mindestens eine Befestigungselement (16) versehen ist mit einem ersten Vorspannelement (54) zum Vorspannen des Verriegelungselements (46) in dessen Vorverriegelungsposition und einem Auslöseelement (60), das mindestens einen Rückhaltevorsprung (64) für das Verriegelungselement (46) aufweist,
**dadurch gekennzeichnet ,**
- **dass** das Auslöseelement (60) zwischen einer Rückhalteposition, in der der mindestens eine Rückhaltevorsprung (64) das Verriegelungselement (46) in dessen Entriegelungsposition hält, und einer Freigabeposition, in der der mindestens eine Rückhaltevorsprung (64) das Verriegelungselement (46) zur Bewegung in die Vorverriegelungsposition freigibt, an dem Befestigungselement (16) gelagert ist
- **dass** das Auslöseelement (60) zur Anlage an dem zweiten Teil (18) beim Ansetzen des Befestigungselements (16) an den zweiten Teil (18) vorgesehen ist, und durch dieses Ansetzen in die vorverriegelungsposition bring bar ist und
- dass das Befestigungselement (16) versehen ist mit einem Betätigungselement (28) zum Bewegen des Verriegelungselements (46) zwischen der Vorverriegelungsposition und einer End verriegelungsposition, in der das Befestigungselement (16) an dem zweiten Teil (18) Kraftschlüssig gehalten ist.

2. Vorrichtung nach Anspruch 1, **dadurch gekennzeichnet, dass** das Auslöseelement (60) von mindestens einem zweiten Vorspannelement (62) in seine Rückhalteposition vorgespannt ist.

3. Vorrichtung nach Anspruch 1 oder 2, **dadurch gekennzeichnet, dass** das erste Vorspannelement (54) als Torsionsfeder und insbesondere als Schenkel- oder Schraubenfeder ausgebildet ist.

4. Vorrichtung nach einem der Ansprüche 1 bis 3, **dadurch gekennzeichnet, dass** das mindestens eine zweite Vorspannelement (62) als Schraubendruckfeder ausgebildet ist.

5. Vorrichtung nach einem der Ansprüche 1 bis 4, **dadurch gekennzeichnet, dass** das mindestens eine Befestigungselement (16) einen Grundkörper (20) aufweist, an dem das ersten Vorspannelement (54) und, sofern vorhanden, das zweite Vorspannelement (62), das Auslöseelement (60) und das mit dem Verriegelungselement (46) gekoppelte Betätigungselement (28) angeordnet sind.

6. Vorrichtung nach einem der Ansprüche 1 bis 5, **dadurch gekennzeichnet, dass** das Befestigungselement (16) ferner ein mit dem Verriegelungselement (46) gekoppeltes Anzeigeelement (70) aufweist, das anzeigt, ob sich das Verriegelungselement (46) in seiner Vorverriegelungsposition befindet.

7. Vorrichtung nach Anspruch 6, **dadurch gekennzeichnet, dass** das Anzeigeelement (70) mit dem Auslöseelement (60) gekoppelt ist und anzeigt, ob sich das Auslöseelement (60) in seiner Freigabeposition und damit das Verriegelungselement (46) in seiner Vorverriegelungsposition befindet.

8. Vorrichtung nach Anspruch 7, **dadurch gekennzeichnet, dass** das mindestens eine Anzeigeelement (70) mit dem Auslöseelement (60) insbesondere einstückig verbunden ist.

9. Vorrichtung nach einem der Ansprüche 6 bis 8, **dadurch gekennzeichnet, dass** das mindestens eine Anzeigeelement (70) in seiner die Einnahme der Vorverriegelungsposition des Verriegelungselements (46) anzeigenden Anzeigeposition von außerhalb des Grundkörpers (20) des Befestigungselements (16) sichtbar ist.

10. Vorrichtung nach Anspruch 9, **dadurch gekennzeichnet, dass** das mindestens eine Anzeigeelement (70) in seiner die Einnahme der Vorverriegelungsposition des Verriegelungselements (46) anzeigenden Anzeigeposition aus dem Grundkörper (20) herausragt.

11. Vorrichtung nach einem der Ansprüche 6 bis 10, **dadurch gekennzeichnet, dass** das Anzeigeelement (70) als Anzeigestift ausgebildet ist.

12. Vorrichtung nach einem der Ansprüche 6 bis 11, **dadurch gekennzeichnet, dass** das Anzeigeelement (70) eine zum Grundkörper (20) des Befestigungselements (16) unterschiedliche Farbgebung und/oder Oberflächenstruktur aufweist.

## Claims

1. A device for fastening a first part (14) to a second part (18), particularly for fastening a lining element in the interior of a vehicle, preferably an aircraft, comprising
- at least one fastening element (16) connectable to the first part (14) and releasably attachable to the second part (18),
- the at least one fastening element (16) being provided with
- a locking element (46) being supported at the fastening element (16) so as to be movable between a disengaged position in which the fastening element (16) is able to be set to the second part (18) and to be detached therefrom, and a pre-locking position in which the fastening element (16) is movably held at the second part (18), and
- wherein the at least one fastening element (16) is provided with a first biasing element (54) for biasing the locking element (46) into the pre-locking position thereof and a trigger element (60) comprising at least one retaining projection (64) for the locking element (46),
**characterized in**
- **that** the trigger element (60) is supported at the fastening element (16) between a retaining position in which the at least one retaining projection (64) retains the locking element (46) in the disengaged position thereof, and a releasing position in which the at least one retaining projection (64) releases the locking element (46) for moving into the pre-locking position,
- **that** the trigger element (60) is provided for abutting the second part (18) when the fastening element (16) is set to the second part (18) and is adapted to be brought into the pre-locking positon by being set on in this way, and
- **that** the fastening element (16) is provided with an actuating element (28) for moving the locking element (46) between the pre-locking position and a final locking position in which the fastening element (16) is held at the second part (18) in a definitely fixed manner.

2. The device according to claim 1, **characterized in that** the trigger element (60) is biased into its retaining position by at least one second biasing element (62).

3. The device according to claim 1 or 2, **characterized in that** the first biasing element (54) is configured as a torsion spring and particularly as a spiral or helical spring.

4. The device according to one of claims 1 to 3, **characterized in that** the at least one second biasing element (62) is configured as a helical pressure spring.

5. The device according to one of claims 1 to 4, **characterized in that** the at least one fastening element (16) comprises a basic body (20) at which the first biasing element (54) and, if existing, the second biasing element (62), the trigger element (60) and the actuating element (28) coupled with the locking element (46) are disposed.

6. The device according to one of claims 1 to 5, **characterized in that** the fastening element (16) further comprises an indicator element (70) coupled with the locking element (46), indicating whether the locking element (46) is in its pre-locking position.

7. The device according to claim 6, **characterized in that** the indicator element (70) is coupled with the trigger element (60) and indicates whether the trigger element (60) is in its releasing position and thus the locking element (46) in its pre-locking position.

8. The device according to claim 7, **characterized in that** the at least one indicator element (70) is particularly integrally connected with the trigger element (60).

9. The device according to one of claims 6 to 8, **characterized in that** the at least one indicator element (70) is visible from outside of the basic body (20) of the fastening element (16) in its indicating position indicating that the locking element (46) has assumed the pre-locking position.

10. The device according to claim 9, **characterized in that** the at least one indicator element (70), in its indicating position indicating that the locking element (46) has assumed the pre-locking position, projects from the basic body (20).

11. The device according to one of claims 6 to 10, **characterized in that** the indicator element (70) is configured as an indicator pin.

12. The device according to one of claims 6 to 11, **characterized in that** the indicator element (70) has a coloration and/or surface structure differing from that of the basic body (20) of the fastening element (16).

## Revendications

1. Dispositif de fixation d'une première pièce (14) sur une deuxième pièce (18), en particulier pour fixer un élément de revêtement dans l'intérieur d'un véhicule, de préférence d'un aéronef, comportant
- au moins un élément de fixation (16) qui peut être relié à la première pièce (14) et qui peut être monté de manière détachable sur la deuxième pièce (18),
- ledit au moins un élément de fixation (16) étant pourvu d'un élément de verrouillage (46) qui est monté mobile sur l'élément de fixation (16) entre une position de déverrouillage dans laquelle l'élément de fixation (16) peut être rattaché à la deuxième pièce (18) et détachée de celle-ci, et une position de pré-verrouillage dans laquelle l'élément de fixation (16) est maintenu mobile sur la deuxième pièce (18), et
- ledit au moins un élément de fixation (16) étant pourvu d'un premier élément de précontrainte (54) pour précontraindre l'élément de verrouillage (46) dans sa position de pré-verrouillage et d'un élément de déclenchement (60) qui présente au moins une saillie de retenue (64) pour l'élément de verrouillage (46),
**caractérisé en ce que**
- l'élément de déclenchement (60) est monté sur l'élément de fixation (16) entre une position de retenue dans laquelle ladite au moins une saillie de retenue (64) maintient l'élément de verrouillage (46) dans sa position de déverrouillage, et une position de libération dans laquelle ladite au moins une saillie de retenue (64) libère l'élément de verrouillage (46) pour qu'il se déplace jusque dans la position de pré-verrouillage,
- **en ce que** l'élément de déclenchement (60) est prévu pour venir en appui sur la deuxième pièce (18) lorsque l'élément de fixation (16) est rattaché sur la deuxième pièce (18) et peut, par ce rattachement, être amené dans la position de pré-verrouillage, et
- **en ce que** l'élément de fixation (16) est pourvu d'un élément d'actionnement (28) pour déplacer l'élément de verrouillage (46) entre la position de pré-verrouillage et une position de verrouillage définitif dans laquelle l'élément de fixation (16) est maintenu sur la deuxième pièce (18) par coopération de forces.

2. Dispositif selon la revendication 1, **caractérisé en ce que** l'élément de déclenchement (60) est précontraint dans sa position de retenue par au moins un deuxième élément de précontrainte (62).

3. Dispositif selon l'une ou l'autre des revendications 1 et 2, **caractérisé en ce que** le premier élément de précontrainte (54) est réalisé sous forme de ressort de torsion et en particulier sous forme de ressort à branches ou de ressort hélicoïdal.

4. Dispositif selon l'une des revendications 1 à 3, **caractérisé en ce que** ledit au moins deuxième élément de précontrainte (62) est réalisé sous forme de ressort hélicoïdal de compression.

5. Dispositif selon l'une des revendications 1 à 4, **caractérisé en ce que** ledit au moins un élément de fixation (16) présente un corps de base (20) sur lequel est agencé le premier élément de précontrainte (54) et, pour autant qu'ils soient présents, le deuxième élément de précontrainte (62), l'élément de déclenchement (60) et l'élément d'actionnement (28) accouplé à l'élément de verrouillage (46).

6. Dispositif selon l'une des revendications 1 à 5, **caractérisé en ce que** l'élément de fixation (16) présente en outre un élément d'affichage (70) accouplé à l'élément de verrouillage (46), qui affiche si l'élément de verrouillage (46) se trouve dans sa position de pré-verrouillage.

7. Dispositif selon la revendication 6, **caractérisé en ce que** l'élément d'affichage (70) est accouplé à l'élément de déclenchement (60) et affiche si l'élément de déclenchement (60) se trouve dans sa position de libération et par conséquent si l'élément de verrouillage (46) se trouve dans sa position de pré-verrouillage.

8. Dispositif selon la revendication 7, **caractérisé en ce que** ledit au moins un élément d'affichage (70) est relié à l'élément de déclenchement (60), en particulier d'un seul tenant.

9. Dispositif selon l'une des revendications 6 à 8, **caractérisé en ce que** ledit au moins un élément d'affichage (70) est visible depuis l'extérieur du corps de base (20) de l'élément de fixation (16) dans sa position d'affichage qui affiche que l'élément de verrouillage (46) occupe sa position de pré-verrouillage.

10. Dispositif selon la revendication 9, **caractérisé en ce que** ledit au moins un élément d'affichage (70) fait saillie hors du corps de base (20) dans sa position d'affichage qui affiche que l'élément de verrouillage (46) occupe sa position de pré-verrouillage.

11. Dispositif selon l'une des revendications 6 à 10, **caractérisé en ce que** l'élément d'affichage (70) est réalisé sous forme de doigt d'affichage.

12. Dispositif selon l'une des revendications 6 à 11, **caractérisé en ce que** l'élément d'affichage (70) présente une couleur et/ou une structure de surface différente du corps de base (20) de l'élément de fixation (16).
